(19) Europäisches Patentamt
European Patent Office
Office européen des brevets

(11) **EP 3 572 255 B1**

(12) **EUROPEAN PATENT SPECIFICATION**

(45) Date of publication and mention
of the grant of the patent:
**21.04.2021 Bulletin 2021/16**

(21) Application number: **18742017.9**

(22) Date of filing: **11.01.2018**

(51) Int Cl.:
***B60H 3/06*** *(2006.01)*       ***B01D 46/42*** *(2006.01)*
***F24F 11/62*** *(2018.01)*

(86) International application number:
**PCT/JP2018/000416**

(87) International publication number:
**WO 2018/135361 (26.07.2018 Gazette 2018/30)**

(54) **VEHICLE AIR CONDITIONING APPARATUS**

FAHRZEUGKLIMAANLAGENVORRICHTUNG

APPAREIL DE CLIMATISATION DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.01.2017 JP 2017008781**

(43) Date of publication of application:
**27.11.2019 Bulletin 2019/48**

(73) Proprietor: **Denso Corporation
Kariya-city
Aichi 448-8661 (JP)**

(72) Inventors:
• **FUKUNAGA, Hiroyuki
Aichi 448-8661 (JP)**

• **ISHIYAMA, Naotaka
Aichi 448-8661 (JP)**

(74) Representative: **TBK
Bavariaring 4-6
80336 München (DE)**

(56) References cited:
EP-A1- 2 199 697       JP-A- H0 986 158
JP-A- H10 223 081       JP-A- S61 119 420
JP-A- 2015 190 688       JP-A- 2016 169 924
JP-B2- 3 588 887       US-A1- 2014 366 719
US-A1- 2015 275 738

## Description

TECHNICAL FIELD

The present disclosure relates to a vehicular air conditioner.

BACKGROUND

Conventionally, there is a vehicular air conditioner described in Patent Literature 1. The vehicular air conditioner described in Patent Literature 1 includes a filter disposed between a blower and an air intake port, and a pressure sensor disposed in a space between the blower and the filter. The pressure sensor detects pressure in the space between the blower and the filter. The vehicular air conditioner described in Patent Literature 1 includes a detecting device that detects a degree of clogging of the filter based on the pressure detected by the pressure sensor and an alarm device that provides information about the degree of clogging detected by the detecting device.

US 2014/366719 A1 discloses an air quality controlled air filtering system according to the vehicular air conditioner of the preamble portion of claim 1 of the present disclosure.

PRIOR ART LITERATURE

PATENT LITERATURE

Patent Literature 1: JP H09-202134 A
Patent Literature 2: US 2014/366719 A1
Patent Literature 3: US 2015/275738 A1
Patent Literature 4: JP 3 588887 B2
Patent Literature 5: EP 2 199 697 A1
Patent Literature 6: JP 2016 169924 A

SUMMARY OF INVENTION

In recent years, there is a need for collecting particulates in a space in a vehicle interior because the particulates such as particulate matter (PM) in the air affect health. As this type of particulate, there is PM 2.5, for example. As a method of collecting the particulates, it is conceivable to collect the particulates by causing the particulates to adhere to fiber surfaces of a filter, for example. However, in the method of causing the particulates to adhere to the fiber surfaces of the filter, such clogging that causes a pressure loss at the filter is unlikely to occur even when collecting performance of the filter is reduced by a large amount of particulates adhering to the fiber surfaces of the filter. Therefore, in the vehicular air conditioner described in Patent Literature 1, it may not be possible to detect the reduction of the collecting performance of the filter based on the pressure detected by the pressure sensor.

It is an objective of the present disclosure to provide a vehicular air conditioner capable of detecting reduction of collecting performance of a filter with high accuracy.

A vehicular air conditioner according to an aspect of the present disclosure performs air conditioning of a vehicle interior by blowing air flowing in an air conditioning duct out to the vehicle interior. The vehicular air conditioner includes the air conditioning duct, a blower device, a filter, a particulate sensor and a determination section. The filter collects particulates included in the air flowing in the air conditioning duct. The particulate sensor detects a particulate concentration of the air flowing in the air conditioning duct. The determination section determines whether collecting performance of the filter is reduced based on the particulate concentration detected by the particulate sensor.

With this structure, when the collecting performance of the filter is reduced, the particulate concentration of the air flowing in the air conditioning duct becomes less likely to reduce. In other words, the particulate concentration detected by the particulate sensor becomes less likely to reduce. Therefore, by determining whether the collecting performance of the filter is reduced based on the particulate concentration detected by the particulate sensor, it is possible to detect the reduction of the collecting performance of the filter with high accuracy.

BRIEF DESCRIPTION OF DRAWINGS

FIG. 1 is a block diagram showing a schematic structure of a vehicular air conditioner in a first embodiment.
FIG. 2 is a graph showing an example of output characteristics of a particulate sensor in the first embodiment.
FIG. 3 is a flowchart showing a procedure of processing performed by an ECU in the first embodiment.
FIG. 4 is a graph showing examples of movements of particulate concentrations detected by the particulate sensor in the first embodiment.
FIG. 5 is a flowchart showing a procedure of processing performed by an ECU in a first modification of the first embodiment.
FIG. 6 is a flowchart showing a procedure of processing performed by an ECU in a second modification of the first embodiment.
FIG. 7 is a map showing a relationship between a set level of an air blowing volume of a blower device and threshold values.
FIG. 8 is a flowchart showing a procedure of processing performed by an ECU in a second embodiment.
FIG. 9 is a graph showing examples of movements of particulate concentrations detected by a particulate sensor in the second embodiment.

FIG. 10 is a flowchart showing a procedure of processing performed by an ECU in a third embodiment.

FIG. 11 is a graph showing examples of movements of particulate concentrations detected by a particulate sensor in the third embodiment.

DETAILED DESCRIPTION

Embodiments of a vehicular air conditioner will be described below with reference to the drawings. For easy understanding of the description, the same components in the respective drawings will be provided with the same reference signs wherever possible and will not be described repeatedly.

<First Embodiment>

First, a first embodiment of a vehicular air conditioner will be described.

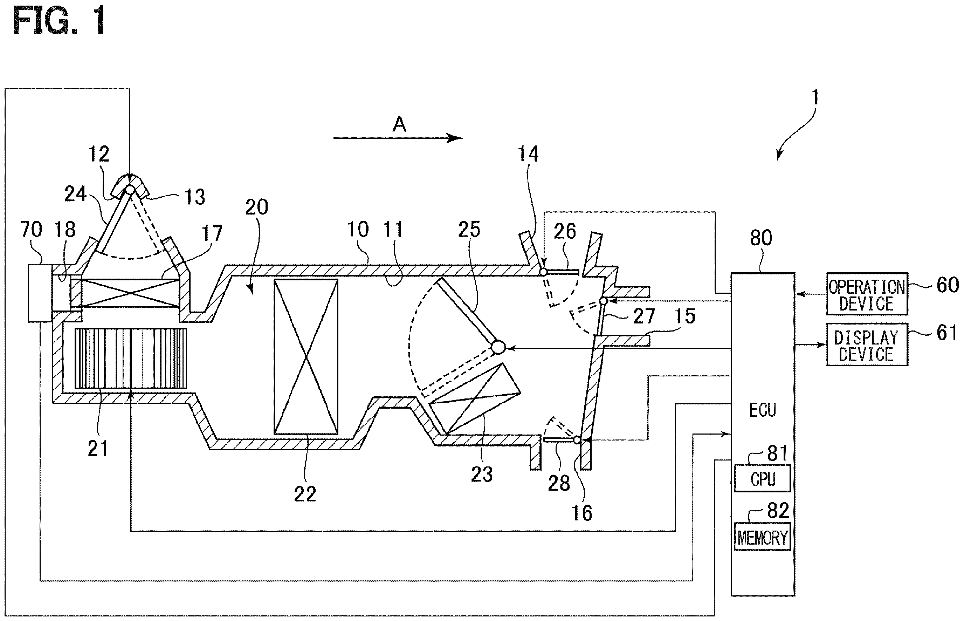

As shown in FIG. 1, a vehicular air conditioner 1 in the present embodiment includes an air conditioning duct 10 and an air conditioning unit 20. The vehicular air conditioner 1 is provided inside an instrument panel of a vehicle.

Inside the air conditioning duct 10, an air passage 11 that introduces conditioned air for air-conditioning a vehicle interior into the vehicle interior is formed. In the air passage 11, air flows in a direction shown by an arrow A in the figure. At a portion on an upstream side of the air conditioning duct 10 in the air flow direction A, an outside air suction port 12 and an inside air suction port 13 are formed as portions that take air into the air passage 11 from outside of the air conditioning duct 10. The outside air suction port 12 is a portion for taking outside air which is air outside the vehicle interior into the air passage 11. The inside air suction port 13 is a portion for taking inside air which is air in the vehicle interior into the air passage 11.

At a portion in the air conditioning duct 10 on a downstream side of the outside air suction port 12 and the inside air suction port 13, a filter 17 is disposed. The filter 17 collects the particulates such as particulate matter included in the outside air taken in from the outside air suction port 12 or the inside air taken in from the inside air suction port 13 by causing the particulates to adhere to the filter 17 to thereby remove the particulates in the air.

At a portion of the air conditioning duct 10 on the downstream side in the air flow direction A, a defroster blow outlet 14, a face blow outlet 15, and a foot blow outlet 16 are formed. The defroster blow outlet 14 blows out the air flowing through the air conditioning duct 10 toward an inner face of a windshield of the vehicle. The face blow outlet 15 blows out the air flowing through the air conditioning duct 10 toward a driver or an occupant in a passenger's seat. The foot blow outlet 16 blows out the air flowing through the air conditioning duct 10 toward feet of the driver or the occupant in the passenger's seat.

The air conditioning unit 20 produces the conditioned air from the air introduced into the air passage 11 from the outside air suction port 12 or the inside air suction port 13. The conditioned air is air for air-conditioning the vehicle interior. The air conditioning unit 20 includes a blower device 21, an evaporator 22, and a heater core 23.

The blower device 21 is disposed on a downstream side of the outside air suction port 12 and the inside air suction port 13 in the air flow direction A. The blower device 21 rotates in accordance with a supply of electric power to thereby generate an airflow in the air passage 11. By adjusting the electric power supplied to the blower device 21, a volume of the air flowing through the air passage 11, i.e., a volume of the conditioned air blown into the vehicle interior is adjusted.

The evaporator 22 is disposed on a downstream side of the blower device 21 in the air flow direction A. The evaporator 22 is a component of a refrigeration cycle (not shown). The refrigeration cycle is formed by a compressor, a condenser, and an expansion valve in addition to the evaporator 22. In the refrigeration cycle, refrigerant circulates through the compressor, the condenser, the expansion valve, and the evaporator 22 in this order. In the evaporator 22, the refrigerant flowing inside exchanges heat with the air in the air passage 11 to thereby evaporate and vaporize. The evaporator 22 has a function of cooling the air flowing through the air passage 11 by utilizing heat of vaporization in vaporization of the refrigerant and a function of dehumidifying the air flowing through the air passage 11.

The heater core 23 is disposed on a downstream side of the evaporator 22 in the air flow direction A. The heater core 23 is connected to an engine (not shown) by a pipe. Engine cooling water circulates between the engine and the heater core 23 through the pipe. The heater core 23 heats the air flowing through the air passage 11 by utilizing the engine cooling water flowing inside the heater core 23 as a heat source.

The air conditioning unit 20 further includes an inside/outside air switching door 24, an air mix door 25, and blow outlet switching doors 26, 27, and 28.

The inside/outside air switching door 24 opens and closes the outside air suction port 12 and the inside air suction port 13. If the inside/outside air switching door 24 is in an inside air introducing position shown by solid lines in the figure, the outside air suction port 12 is closed and the inside air suction port 13 is open. In this case, the vehicular air conditioner 1 is in an inside air circulating mode in which the inside air is taken into the air passage 11 from the inside air suction port 13. If the inside/outside air switching door 24 is in an outside air introducing position shown by broken lines in the figure, the inside air suction port 13 is closed and the outside air suction port 12 is open. In this case, the vehicular air conditioner 1 is in an outside air introducing mode in which the outside air is taken into the air passage 11 from the outside air suction port 12.

The air mix door 25 adjusts a ratio between a volume of the air flowing into the heater core 23 and a volume of the air detouring around the heater core 23. To put it concretely, a position of the air mix door 25 can be adjusted between a maximum heating position shown by solid lines in the figure and a maximum cooling position shown by broken lines in the figure. If the air mix door 25 is in the maximum heating position, most of the air passing through the evaporator 22 passes through the heater core 23 and therefore a temperature of the conditioned air increases the most. If the air mix door 25 is in the maximum cooling position, most of the air passing through the evaporator 22 detours around the heater core 23. In this case, the air cooled in the evaporator 22 flows to the respective blow outlets 14 to 16 as it is and therefore the temperature of the conditioned air decreases the most. In the vehicular air conditioner 1, by adjusting an opening of the air mix door 25 between the maximum heating position and the maximum cooling position, the temperature of the conditioned air is adjusted.

The blow outlet switching doors 26 to 28 switch between open and closed states of the defroster blow outlet 14, the face blow outlet 15, and the foot blow outlet 16, respectively. When at least one of the blow outlet switching doors 26 to 28 is brought into the open state, the conditioned air is blown out from the open blow outlet toward the vehicle interior.

Next, an electric configuration of the vehicular air conditioner 1 will be described.

The vehicular air conditioner 1 includes an operation device 60, a display device 61, a particulate sensor 70, and an ECU (electronic control unit) 80.

The operation device 60 is a device operated by the driver to adjust a volume, a temperature, and the like of the conditioned air. The operation device 60 is disposed on the instrument panel of the vehicle, for example. With the operation device 60, it is possible to select one of the outside air introducing mode and the inside air circulating mode, for example. With the operation device 60, it is also possible to set the volume of the conditioned air, the temperature of the conditioned air, the blow outlet for the conditioned air, and the like. The operation device 60 outputs the pieces of operation information to the ECU 80.

The display device 61 is a device that displays various kinds of information of the vehicular air conditioner 1. In the present embodiment, a display device of a car navigation system of the vehicle is used as a substitute for the display device 61 of the vehicular air conditioner 1. It is also possible to use a dedicated display device 61 for the vehicular air conditioner 1.

The particulate sensor 70 is provided on a detour path 18 formed at the portion of the air conditioning duct 10 where the filter 17 is disposed. The detour path 18 is a portion for causing the outside air taken in from the outside air suction port 12 or the inside air taken in from the inside air suction port 13 to flow while detouring around the filter 17. The particulate sensor 70 detects a concentration CD of the particulates included in the air flowing through the detour path 18.

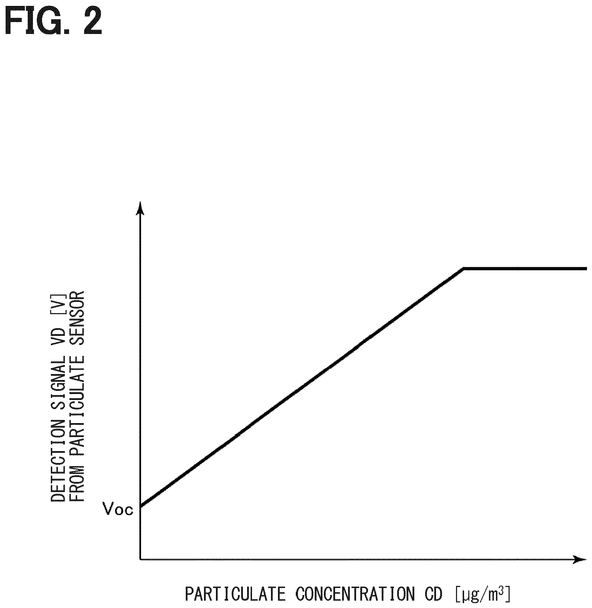

To put it concretely, the particulate sensor 70 includes a light emitting element that applies light to the detour path 18 and a light receiving element that receives the light, for example. The light applied by the light emitting element is reflected by the particulate included in the air flowing through the detour path 18. The reflected light is received by the light receiving element. In other words, an amount of light received by the light receiving element changes depending on the concentration of the particulates included in the air flowing through the detour path 18. The light receiving element outputs a voltage signal corresponding to the amount of received reflected light. The particulate sensor 70 outputs a voltage signal corresponding to the output voltage of the light receiving element as a detection signal VD. In other words, the particulate sensor 70 outputs the detection signal VD corresponding to the particulate concentration of the air passing through the detour path 18, i.e., the particulate concentration of the air flowing through the air conditioning duct 10. The detection signal VD of the particulate sensor 70 is a criterion voltage Voc when the particulate concentration is 0 [$\mu$g/m$^3$] as shown in FIG. 2. The detection signal VD of the particulate sensor 70 increases as the particulate concentration CD increases and becomes a constant value when the particulate concentration CD becomes equal to or higher than a predetermined concentration.

As shown in FIG. 1, the ECU 80 is mainly formed by a microcomputer including a CPU 81, a memory 82, and the like. The ECU 80 acquires the operation information from the operation device 60 and drives the air conditioning unit 20 based on the acquired operation information. In this way, the conditioned air corresponding to the operation information of the operation device 60 is produced by the air conditioning unit 20.

The ECU 80 takes in the detection signal VD from the particulate sensor 70. The ECU 80 acquires information about the particulate concentration CD based on the detection signal VD from the particulate sensor 70 and displays the acquired information about the particulate concentration CD on the display device 61.

The ECU 80 determines whether collecting performance of the filter 17 is reduced based on the particulate concentration CD detected by the particulate sensor 70. As described above, the ECU 80 in the present embodiment corresponds to a determination section.

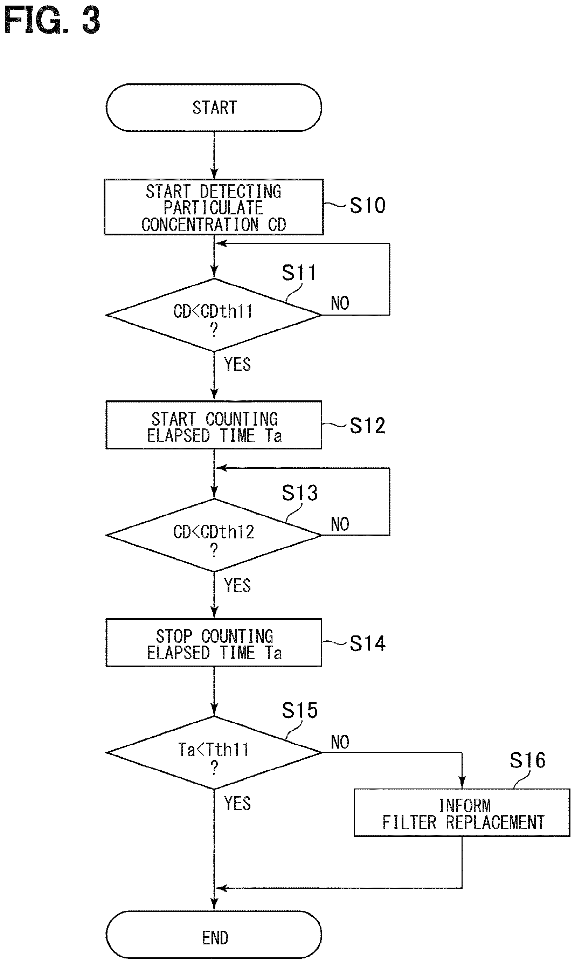

Next, a specific procedure of filter performance determination processing performed by the ECU 80 will be described with reference to FIG. 3. The ECU 80 starts the processing shown in FIG. 3 when the vehicular air conditioner 1 starts operating.

As shown in FIG. 3, the ECU 80 first starts detection of the particulate concentration CD based on the detection signal VD of the particulate sensor 70 as the processing in step S10. After that, the ECU 80 repeatedly detects the particulate concentration CD at predetermined intervals.

Next, the ECU 80 determines whether the particulate concentration CD detected by the particulate sensor 70 is lower than a first threshold concentration CDth11 as the processing in step S11. The first threshold concentration CDth11 is set in advance and stored in the memory 82 in the ECU 80. In a case of an affirmative determination in the processing in step S11, i.e., if the particulate concentration CD is lower than the first threshold concentration CDth11, the ECU 80 starts measurement of an elapsed time Ta from this point of time by using a counter or the like as the processing in step S12.

Following the processing in step S12, the ECU 80 determines whether the particulate concentration CD detected by the particulate sensor 70 is lower than a second threshold concentration CDth12 as the processing in step S13. The second threshold concentration CDth12 is set to a lower value than the first threshold concentration CDth11 and stored in the memory 82 in the ECU 80. In a case of an affirmative determination in the processing in step S13, i.e., if the particulate concentration CD is lower than the second threshold concentration CDth12, the ECU 80 ends the measurement of the elapsed time Ta as the processing in step S14.

Then, the ECU 80 determines whether the elapsed time Ta is shorter than a predetermined time Tth11 as the processing in step S15. In a case of an affirmative determination in the processing in step S15, i.e., if the elapsed time Ta is shorter than the predetermined time Tth11, the ECU 80 ends the series of processing steps.

In a case of a negative determination in the processing in step S15, i.e., if the elapsed time Ta is equal to or longer than the predetermined time Tth11, the ECU 80 provides information about encouragement of replacement of the filter 17 as the processing in step S16. To put it concretely, the ECU 80 provides a display for encouraging the replacement of the filter 17 by using the display device 61. In this way, the occupant in the vehicle can know that the filter 17 needs replacing by seeing the display on the display device 61. As described above, in the present embodiment, the display device 61 corresponds to an alarm unit that gives the alarm for encouraging the replacement of the filter 17.

Next, an example of operation of the vehicular air conditioner 1 in the present embodiment will be described.

When the vehicular air conditioner 1 is operating in the inside air circulating mode, the particulates included in the air in the vehicle interior is removed by the filter 17 while the air in the vehicle interior passes through the filter 17 and, as a result, the air in the vehicle interior is cleaned with the passage of time. Therefore, the particulate concentration CD detected by the particulate sensor 70 gradually reduces with the passage of time. When the collecting performance of the filter 17 is reduced, the particulate concentration of the air flowing through the air conditioning duct 10 becomes less likely to reduce. In other words, the particulate concentration CD detected by the particulate sensor 70 becomes less likely to reduce.

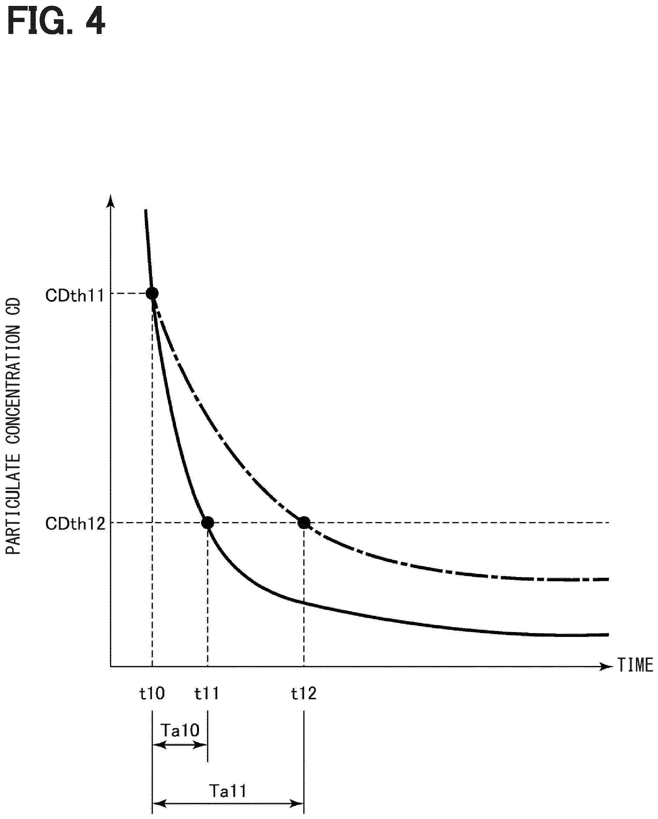

To put it concretely, if the filter 17 has initial collecting performance, the particulate concentration CD changes as shown by a solid line in FIG. 4, for example. If the collecting performance of the filter 17 is reduced, an amount of reduction of the particulate concentration CD per unit time decreases as shown by a one-dot chain line in FIG. 4.

In the vehicular air conditioner 1 in the present embodiment, when the particulate concentration CD reduces to the first threshold concentration CDth11 at a time t10, the ECU 80 starts the measurement of the elapsed time Ta at the time t10. If the filter 17 has the initial collecting performance, i.e., if the particulate concentration CD changes as shown by the solid line in FIG. 4, the particulate concentration CD reduces to the second threshold concentration CDth12 at a time t11. Therefore, the elapsed time measured by the ECU 80 is "Ta10". If the elapsed time Ta10 is shorter than a predetermined time Tth11, the ECU 80 does not give the alarm for encouraging the replacement of the filter 17.

On the other hand, if the collecting performance of the filter 17 is reduced, i.e., if the particulate concentration CD changes as shown by the one-dot chain line in FIG. 4, the particulate concentration CD reduces to the second threshold concentration CDth12 at a time t12. Therefore, the elapsed time measured by the ECU 80 is "Ta11". If the elapsed time Ta11 is longer than the predetermined time Tth11, the ECU 80 gives the alarm for encouraging the replacement of the filter 17 by using the display device 61.

In the processing shown in FIG. 3, it is possible to accurately determine the collecting performance of the filter 17 in the situation in which the particulate concentration CD gradually reduces with the passage of time. In other words, in the processing shown in FIG. 3, it may be difficult to correctly determine the collecting performance of the filter 17 in a situation in which the particulate concentration CD does not gradually reduce with the passage of time. The situation in which the particulate concentration CD does not gradually reduce with the passage of time is a situation in which a vehicle door is opened during the measurement of the elapsed time Ta and, as a result, the particulate concentration in the vehicle interior increases sharply, for example. Therefore, the processing shown in FIG. 3 is preferably performed in a situation in which the particulate concentration in the vehicle interior is unlikely to change and specifically in a situation in which the vehicular air conditioner 1 is operating in the inside air circulating mode.

With the above-described vehicular air conditioner 1 in the present embodiment, it is possible to obtain the following functions and effects described in (1) to (3).

(1) The ECU 80 determines whether the collecting performance of the filter 17 is reduced based on the particulate concentration CD detected by the particulate sensor 70. In this way, even in collecting the particulates such as the particulate matter in the air with the filter 17, it is possible to detect the reduction of the collecting performance of the filter 17 with high accuracy.

(2) The ECU 80 determines whether the collecting performance of the filter 17 is reduced based on the elapsed time Ta required for the particulate concentration CD detected by the particulate sensor 70 to reduce from the first threshold concentration CDth11 to the second threshold concentration CDth12. In this way, it is possible to easily detect the reduction of the collecting performance of the filter 17.

(3) The vehicular air conditioner 1 includes the display device 61 that gives the alarm for encouraging the replacement of the filter 17 when the reduction of the collecting performance of the filter 17 is detected. As a result, the occupant in the vehicle can replace the filter 17 early when the collecting performance of the filter 17 is reduced, which can more appropriately suppress increase of the particulate concentration in the vehicle interior.

(First Modification)

Next, a first modification of the vehicular air conditioner 1 in the first embodiment will be described.

In the vehicular air conditioner 1 in the first embodiment, if a vehicle operation increasing the particulate concentration in the vehicle interior is carried out during the measurement of the elapsed time Ta by the ECU 80, for example, the particulate concentration CD detected by the particulate sensor 70 increases and therefore it may be impossible to correctly measure the elapsed time Ta. The vehicle operation increasing the particulate concentration in the vehicle interior is an operation for opening the vehicle door, for example. In such a situation, the ECU 80 may make an erroneous determination of whether the collecting performance of the filter 17 is reduced.

Therefore, in the present modification, the ECU 80 stops the determination of whether the collecting performance of the filter 17 is reduced, if the vehicle operation increasing the particulate concentration in the vehicle interior is carried out during the measurement of the elapsed time Ta by the ECU 80.

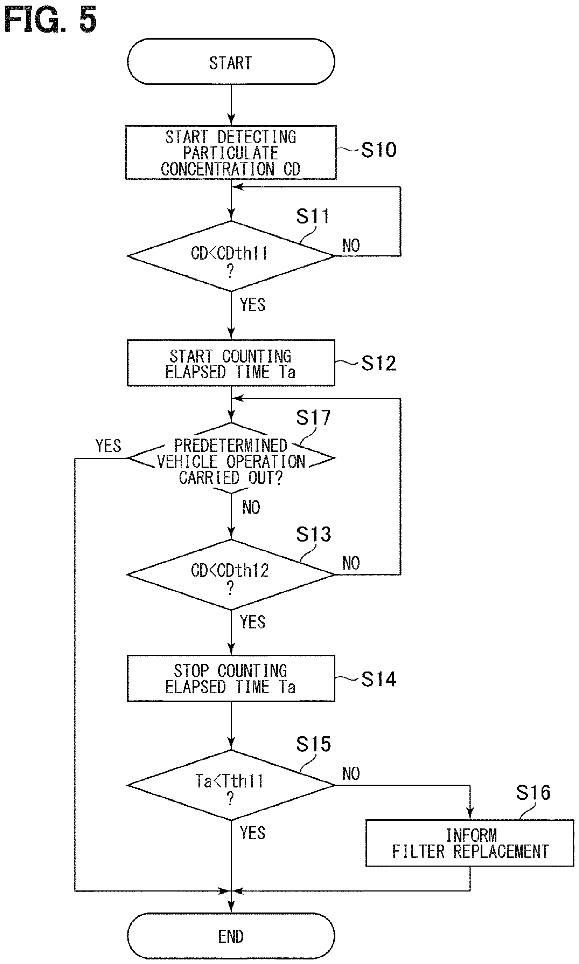

To put it concretely, as shown in FIG. 5, the ECU 80 in the present modification determines whether the predetermined vehicle operation increasing the particulate concentration in the vehicle interior is carried out as processing in step S17 after the ECU 80 performs processing in step S12, i.e., after the ECU 80 starts measurement of the elapsed time Ta. In the processing in step S17, the ECU 80 determines that the predetermined vehicle operation increasing the particulate concentration in the vehicle interior is carried out based on detection of any of the following operations (a1) to (a3), for example.

(a1) The operation for opening the vehicle door.
(a2) An operation for opening a vehicle window.
(a3) An operation for selecting an outside air introducing mode as an operation mode of the vehicular air conditioner 1.

In a case of a negative determination in the processing in step S17, i.e., if the operation increasing the particulate concentration in the vehicle interior is not carried out, the ECU 80 performs processing in step S13. In other words, the ECU 80 constantly monitors whether the operation increasing the particulate concentration in the vehicle interior is carried out during the measurement of the elapsed time Ta.

In a case of an affirmative determination in the processing in step S17 during the measurement of the elapsed time Ta, i.e., if the operation increasing the particulate concentration in the vehicle interior is carried out, the ECU 80 ends the series of processing steps without performing the processing in step S13 and the processing steps after step S13. In other words, the ECU 80 stops the determination of whether the collecting performance of the filter 17 is reduced, if carrying out of the predetermined vehicle operation increasing the particulate concentration in the vehicle interior is detected.

With this structure, the ECU 80 becomes less likely to make the erroneous determination of whether the collecting performance of the filter 17 is reduced.

(Second Modification)

Next, a second modification of the vehicular air conditioner 1 in the first embodiment will be described.

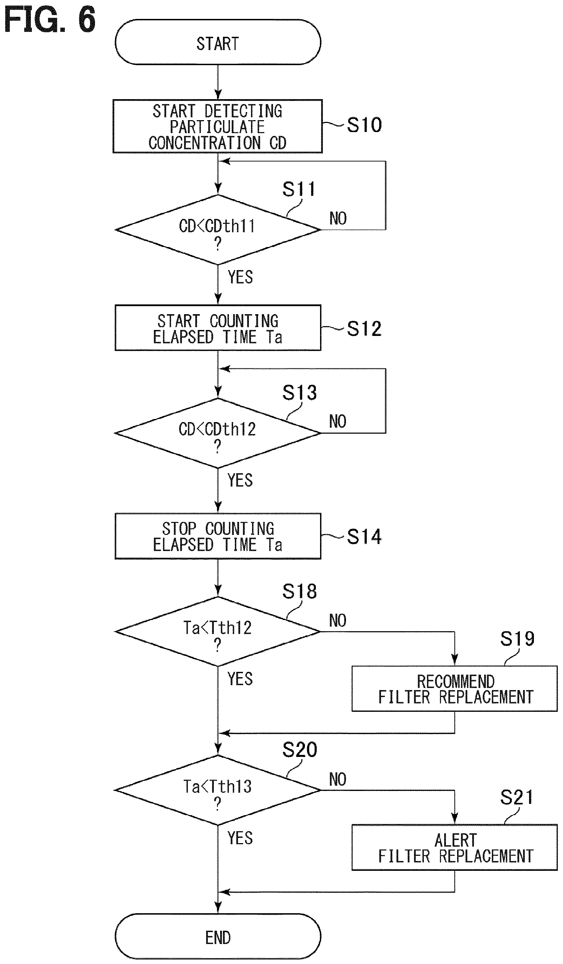

As shown in FIG. 6, an ECU 80 in the present modification determines whether an elapsed time Ta is shorter than a first predetermined time Tth12 as processing in step S18 after ending measurement of the elapsed time Ta in processing in step S14. In a case of a negative determination in the processing in step S18, i.e., if the elapsed time Ta is equal to or longer than the first predetermined time Tth12, the ECU 80 gives an alarm for recommending replacement of a filter 17 by using a display device 61 as processing in step S19.

In a case of an affirmative determination in the processing in step S18, i.e., if the elapsed time Ta is shorter than the first predetermined time Tth12, the ECU 80 determines whether the elapsed time Ta is shorter than a second predetermined time Tth13 as processing in step S20. The second predetermined time Tth13 is set to a longer time than the first predetermined time Tth12 and stored in a memory 82 in the ECU 80. The ECU 80 performs the processing in step S20 also when the ECU 80 performs the processing in step S19.

In a case of a negative determination in the processing in step S20, i.e., if the elapsed time Ta is equal to or longer than the second predetermined time Tth13, the ECU 80 gives an alarm for requesting the replacement of the filter 17 by using the display device 61 as processing in step S21 and then ends the series of processing steps. In a case of an affirmative determination in the processing in step S20, i.e., if the elapsed time Ta is shorter than the second predetermined time Tth13, the ECU 80 ends the series of processing steps.

With this structure, if the elapsed time Ta becomes equal to or longer than the second predetermined time Tth13, i.e., if the collecting performance of the filter 17 significantly reduces, the display device 61 gives the alarm for requesting the replacement of the filter 17. In this way, it is possible to more strongly encourage an occupant in a vehicle to replace the filter 17.

(Third Modification)

Next, a third modification of the vehicular air conditioner 1 in the first embodiment will be described.

As shown in FIG. 1, a volume of air passing through a detour path 18 changes according to a volume of air blown by a blower device 21. To put it concretely, the larger the air blowing volume of the blower device 21 is, the larger the volume of air passing through the detour path 18 becomes. Such a change in the volume of air passing through the detour path 18 causes a change in a particulate concentration CD detected by a particulate sensor 70. To put it concretely, the larger the volume of air passing through the detour path 18 is, the smaller the particulate concentration CD detected by the particulate sensor 70 becomes. In this manner, if the particulate concentration CD detected by the particulate sensor 70 changes as the air blowing volume of the blower device 21 changes, it is difficult to correctly measure an elapsed time Ta.

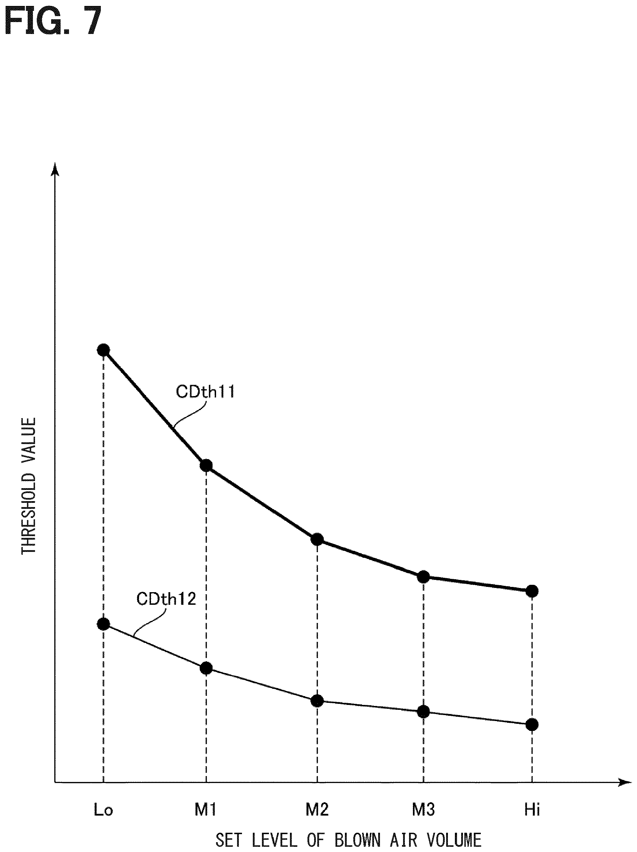

Therefore, an ECU 80 in the present modification changes a first threshold concentration CDth11 and a second threshold concentration CDth12 according to a set level of the air blowing volume of the blower device 21. To put it concretely, the ECU 80 has a map showing relationships among the set level of the air blowing volume of the blower device 21 and the threshold concentrations CDth11, CDth12 as shown in FIG. 7. In FIG. 7, "Lo" as a set level of the air blowing volume of the blower device 21 indicates a minimum set level of the air blowing volume. "Hi" as a set level of the air blowing volume of the blower device 21 indicates a maximum set level of the air blowing volume. "M1", "M2", "M3" as set levels of the air blowing volume of the blower device 21 indicate set levels of the air blowing volume between "Lo" and "Hi". In the map shown in FIG. 7, the threshold concentrations CDth11, CDth12 become smaller values as the set level of the air blowing volume of the blower device 21 changes from "Lo" to "Hi". The map shown in FIG. 7 is stored in a memory 82 of the ECU 80 in advance.

With this structure, since the threshold concentrations CDth11, CDth12 change according to the change of the air blowing volume of the blower device 21, it is possible to measure the correct elapsed time Ta. As a result, it is possible to determine whether collecting performance of a filter 17 is reduced with high accuracy.

<Second Embodiment>

Next, a second embodiment of the vehicular air conditioner 1 will be described. Differences from the above-described first embodiment will be mainly described below.

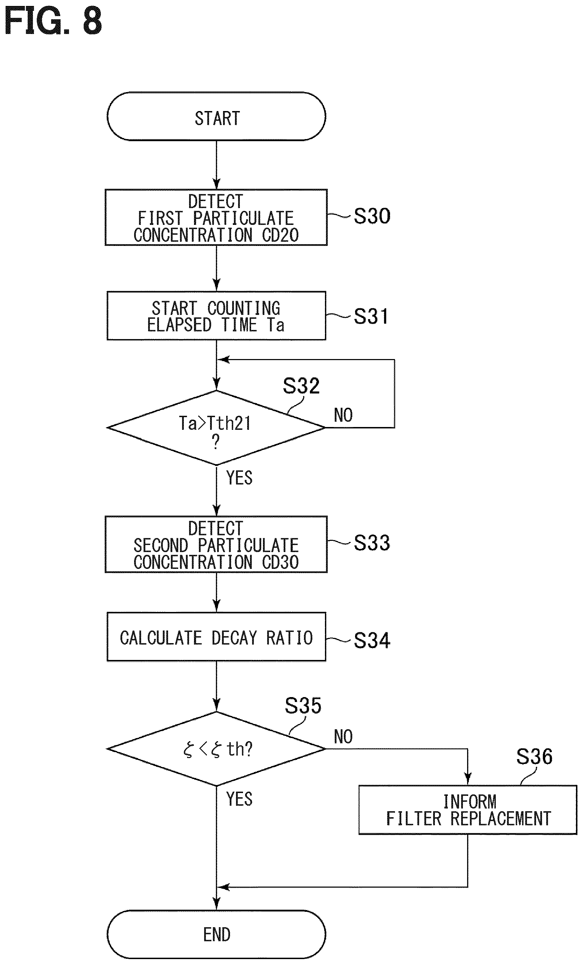

An ECU 80 in the present embodiment performs filter performance determination processing shown in FIG. 8 in place of the filter performance determination processing shown in FIG. 3 when the vehicular air conditioner 1 starts operating. In other words, the ECU 80 first detects a first particulate concentration CD20 based on a detection signal VD of a particulate sensor 70 as processing in step S30. The first particulate concentration CD20 is a particulate concentration detected by the particulate sensor 70 when the vehicular air conditioner 1 starts operating. Then, the ECU 80 starts measurement of an elapsed time Ta as processing in step S31. In other words, the ECU 80 starts the measurement of the elapsed time Ta from a point of time when the first particulate concentration CD20 is detected. Then, the ECU 80 determines whether the elapsed time Ta is longer than a predetermined time Tth21 as processing in step S32.

In a case of an affirmative determination in the processing in step S32, i.e., if the elapsed time Ta is longer than the predetermined time Tth21, the ECU 80 detects a second particulate concentration CD30 at this point of time based on a detection signal VD of the particulate sensor 70 as processing in step S33. The second particulate concentration CD30 is a particulate concentration detected by the particulate sensor 70 when the predetermined time Tth21 has elapsed since the start of the operation of the vehicular air conditioner 1.

Following the processing in step S33, the ECU 80 calculates a decay ratio $\zeta$ of the particulate concentration based on the following formula f1 as processing in step S34.

$$\zeta = CD30/CD20 \ (f1)$$

Then, the ECU 80 determines whether the decay ratio $\zeta$ is smaller than a threshold value $\zeta$th as processing in step S35. In a case of an affirmative determination in the processing in step S35, i.e., if the decay ratio $\zeta$ is smaller than the threshold value $\zeta$th, the ECU 80 ends the series of processing steps.

In a case of a negative determination in the processing in step S35, i.e., if the decay ratio $\zeta$ is equal to or larger than the threshold value $\zeta$th, the ECU 80 provides information about encouragement of replacement of a filter 17 by using a display device 61 as processing in step S36.

Next, an example of operation of the vehicular air conditioner 1 in the present embodiment will be described.

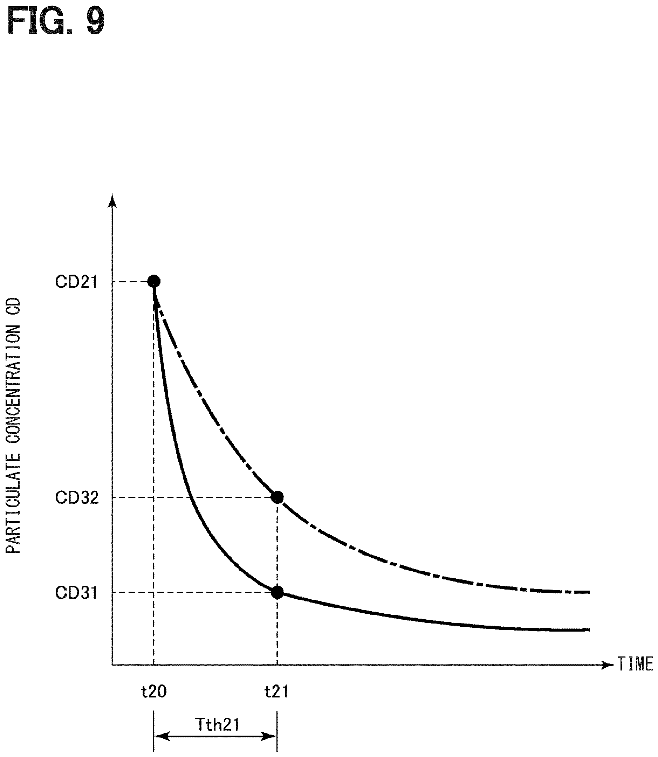

In the vehicular air conditioner 1 in the present embodiment, as shown in FIG. 9, the ECU 80 detects a first particulate concentration CD21 by using the particulate sensor 70 at a time t20 when the vehicular air conditioner 1 starts operating. Then, if the filter 17 has initial collecting performance, the particulate concentration CD changes as shown by a solid line in FIG. 9, for example. At this time, the ECU 80 detects a second particulate concentration CD31 by using the particulate sensor 70 at a time t21 when a predetermined time Tth21 has elapsed since the time t20. Therefore, the decay ratio $\zeta$ calculated by the ECU 80 is "CD31/CD21". If the decay ratio, "CD31/CD21" is smaller than the threshold value $\zeta$th, the ECU 80 does not give the alarm for encouraging the replacement of the filter 17.

On the other hand, if the collecting performance of the filter 17 is reduced, the particulate concentration CD changes as shown by a one-dot chain line in FIG. 9, for example. At this time, the ECU 80 detects a second particulate concentration CD32 by using the particulate sensor 70 at the time t21 when the predetermined time Tth21 has elapsed since the time t20. Therefore, a decay ratio $\zeta$ calculated by the ECU 80 is "CD32/CD21". Here, the second particulate concentration CD32 is a larger value than the second particulate concentration CD31 detected by the particulate sensor 70 when the filter 17 has the initial collecting performance. Therefore, the decay ratio, "CD32/CD21" is a larger value than the decay ratio, "CD31/CD21". If the decay ratio, "CD32/CD21" is equal to or larger than the threshold value $\zeta$th, the ECU 80 gives the alarm for encouraging the replacement of the filter 17 by using the display device 61.

With the above-described vehicular air conditioner 1 in the present embodiment, it is possible to obtain the following function and effect described in (4) in addition to the functions and effects described in (1) and (2) in the first embodiment.

(4) The ECU 80 detects the first particulate concentration CD20 by using the particulate sensor 70 when the vehicular air conditioner 1 starts operating, i.e., when air conditioning of the vehicle interior starts. The ECU 80 detects a second particulate concentration CD30 by using the particulate sensor 70 when the predetermined time Tth21 has elapsed since the start of the air conditioning of the vehicle interior. The ECU 80 determines whether the collecting performance of the filter 17 is reduced based on the first particulate concentration CD20 and the second particulate concentration CD30. With this structure, it is possible to reliably determine whether the collecting performance of the filter 17 is reduced when the predetermined time Tth21 has elapsed since the start of the air conditioning of the vehicle interior.

<Third Embodiment>

Next, a third embodiment of the vehicular air conditioner 1 will be described. Differences from the above-described first embodiment will be mainly described below.

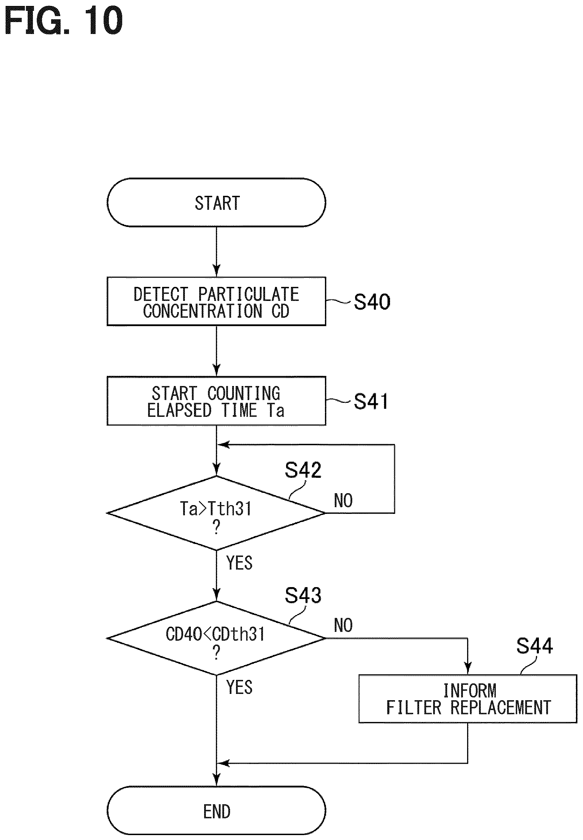

An ECU 80 in the present embodiment performs filter performance determination processing shown in FIG. 10 in place of the filter performance determination processing shown in FIG. 3 when the vehicular air conditioner 1 starts operating. The ECU 80 first starts detection of a particulate concentration CD40 based on a detection signal VD of a particulate sensor 70 as processing in step S40 and starts measurement of an elapsed time Ta as processing in step S41.

Then, the ECU 80 determines whether the elapsed time Ta is longer than a predetermined time Tth31 as processing in step S42. In a case of an affirmative determination in the processing in step S42, i.e., if the elapsed time Ta is longer than the predetermined time Tth31, the ECU 80 determines whether the particulate concentration CD40 detected based on the detection signal VD of the particulate sensor 70 is lower than a threshold concentration CDth31 at this point of time as processing in step S43. In a case of an affirmative determination in the processing in step S43, i.e., if the particulate concentration CD40 is lower than the threshold concentration CDth31, the ECU 80 ends the series of processing steps.

In a case of a negative determination in the processing in step S43, i.e., if the particulate concentration CD40 is equal to or higher than the threshold concentration CDth31, the ECU 80 provides information about encouragement of replacement of a filter 17 by using a display device 61 as processing in step S44.

Next, an example of operation of the vehicular air conditioner 1 in the present embodiment will be described.

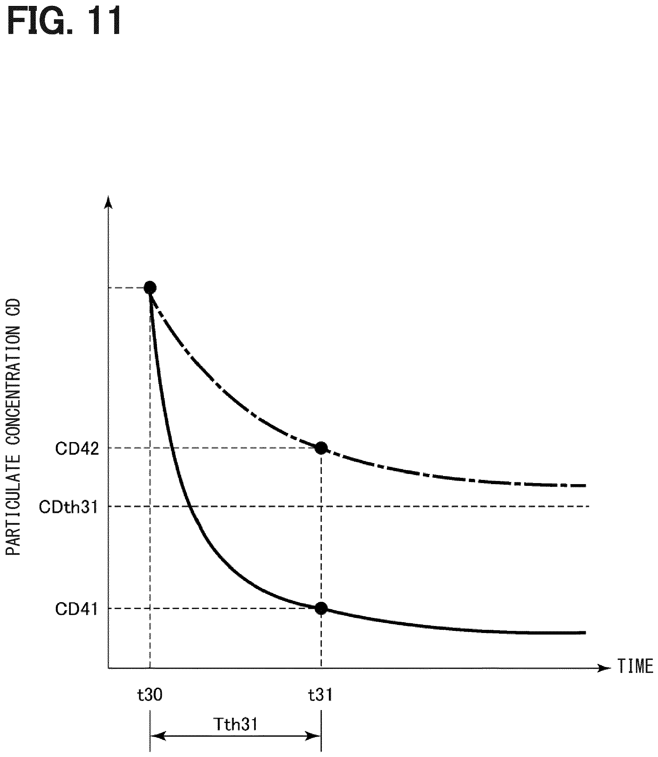

In the vehicular air conditioner 1 in the present embodiment, as shown in FIG. 11, the ECU 80 starts the measurement of the elapsed time Ta at a time t30 when the vehicular air conditioner 1 starts operating. Then, if the filter 17 has initial collecting performance, the particulate concentration CD changes as shown by a solid line in FIG. 11, for example. In this case, the ECU 80 detects a particulate concentration CD41 by using the particulate sensor 70 at a time t31 when the predetermined time Tth31 has elapsed since the time t30. If the particulate concentration CD41 is lower than the threshold concentration CDth31, the ECU 80 does not give the alarm for encouraging the replacement of the filter 17.

On the other hand, if the collecting performance of the filter 17 is reduced, the particulate concentration CD changes as shown by a one-dot chain line in FIG. 11, for example. At this time, the ECU 80 detects a particulate concentration CD42 by using the particulate sensor 70 at the time t31 when the predetermined time Tth31 has elapsed since the time t30. If the particulate concentration CD42 is higher than the threshold concentration CDth31, the ECU 80 gives the alarm for encouraging the replacement of the filter 17 by using the display device 61.

With the above-described vehicular air conditioner 1 in the present embodiment, it is possible to obtain the following function and effect described in (5) in addition to the functions and effects described in (1) and (2) in the first embodiment.

(5) The ECU 80 determines whether the collecting performance of the filter 17 is reduced based on the particulate concentration CD detected by the particulate sensor 70 when the predetermined time Tth31 has elapsed since the start of the operation of the vehicular air conditioner 1, i.e., since the start of the air conditioning of the vehicle interior. With this structure, it is possible to determine whether the collecting performance of the filter 17 is reduced by detecting the particulate concentration CD only once by using the particulate sensor 70 after the start of the air conditioning of the vehicle interior. As a result, it is possible to easily determine whether the collecting performance of the filter 17 is reduced.

<Other Embodiments>

The respective embodiments may be practiced in the following modes.

The threshold concentrations CDth11, CDth12, CDth31 and the predetermined times Tth11, Tth12, Tth13, Tth21, Tth31 may be set finely according to a capacity of a vehicle interior of each vehicle.

The threshold concentrations CDth11, CDth12, CDth31 and the predetermined times Tth11, Tth12, Tth13, Tth21, Tth31 may be set according to a position and a layout of the inside/outside air switching door 24 in the vehicle interior.

The threshold concentrations CDth11, CDth12, CDth31 and the predetermined times Tth11, Tth12, Tth13, Tth21, Tth31 may be changed depending on the type of the filter 17. The types of the filter 17 include a filter for PM2.5, a filter for pollen, a normal filter, and the like, for example. In this case, the vehicle is provided with a switch or the like to be operated by the occupant of the vehicle when the filter 17 is replaced, for example. With the switch or the like, it is possible to select the type of the filter 17 after the replacement. The ECU 80 detects the type of the filter 17 after the replacement based on an output signal of the switch or the like and uses a threshold concentration and a predetermined time according to the type of the filter 17 detected.

The alarm unit that gives the alarm for encouraging the replacement of the filter 17 is not limited to the display device 61 and may be a suitable device. As the alarm unit, it is possible to use a speaker device that provides information about encouragement of the replacement of the filter 17 by using a sound, a warning light for encouraging the replacement of the filter 17 by blinking, and the like.

When the ECU 80 determines that the collecting performance of the filter 17 is reduced, the ECU 80 may increase a rotating speed of the blower device 21, for example, instead of displaying the fact that the collecting performance of the filter 17 is reduced on the display device 61. By increasing the rotating speed of the blower device 21, it is possible to increase a collected amount of particulate per unit time by the filter 17 to thereby clean the vehicle interior.

The position of the particulate sensor 70 is not limited to the position near the filter 17 and may be changed if necessary.

When the ECU 80 performs the processing shown in each of FIGS. 3, 5, 6, 8, and 10, the ECU 80 may use a value correlated with the particulate concentration CD detected by the particulate sensor 70 in place of the particulate concentration CD. For example, the ECU 80 may use the detection signal VD of the particulate sensor 70 as it is in place of the particulate concentration CD detected by the particulate sensor 70.

Means and/or functions which the ECU 80 provides may be provided by a software stored in a tangible memory and a computer for running the software, a software only, a hardware only, or a combination of them. If the ECU 80 is provided by an electronic circuit which is a hardware, for example, the ECU 80 may be provided by a digital circuit or an analog circuit including a large number of logic circuits.

The present disclosure is not limited to the above-described concrete examples. The above-described concrete examples modified in design by a person skilled in the art where necessary are also included in the scope of the present disclosure, if the modified concrete examples have characteristics of the present disclosure, as defined by the appended claims. Respective components in the above-described respective concrete examples and arrangements, conditions, shapes, and the like of the components are not limited to those shown in the examples and can be changed if necessary. The respective components in the above-described respective concrete examples can be combined in different ways if necessary unless a technical contradiction arises.

**Claims**

1. A vehicular air conditioner (1) that performs air conditioning of a vehicle interior by blowing air flowing in an air conditioning duct (10) out to the vehicle interior, the vehicular air conditioner comprising:

   the air conditioning duct (10);
   a blower device (21) that blows the air in the air conditioning duct;
   a filter (17) that collects particulates included in the air flowing in the air conditioning duct;
   a particulate sensor (70) that detects a particulate concentration of the air flowing in the air conditioning duct; and

a determination section (80) that determines whether collecting performance of the filter is reduced based on the particulate concentration detected by the particulate sensor, wherein

the determination section has a first threshold concentration set for the particulate concentration detected by the particulate sensor, and a second threshold concentration lower than the first threshold concentration, **characterized in that**

the determination section determines whether the collecting performance of the filter is reduced based on an elapsed time required for the particulate concentration detected by the particulate sensor to reduce from the first threshold concentration to the second threshold concentration, and

the determination section reduces the first threshold concentration and the second threshold concentration with increase in air blowing volume of the blower device (21).

2. The vehicular air conditioner according to claim 1, wherein

the determination section monitors whether a predetermined vehicle operation increasing the particulate concentration in the vehicle interior is carried out during the determination of whether the collecting performance of the filter is reduced, and

when the determination section detects carrying out of the predetermined vehicle operation, the determination section stops the determination of whether the collecting performance of the filter is reduced.

3. The vehicular air conditioner according to claim 1 or 2, further comprising an alarm unit (61) that provides information about encouragement of replacement of the filter when reduction of the collecting performance of the filter is detected.

**Patentansprüche**

1. Fahrzeugklimaanlage (1), die eine Klimatisierung eines Fahrzeuginnenraums durch Ausblasen von Luft, die in einem Klimatisierungskanal (10) strömt, in den Fahrzeuginnenraum ausführt, wobei die Fahrzeugklimaanlage Folgendes aufweist:

den Klimatisierungskanal (10);
eine Gebläsevorrichtung (21), die die Luft in dem Klimatisierungskanal bläst;
einen Filter (17), der Partikel, die in der Luft, die in dem Klimatisierungskanal strömt, umfasst sind, sammelt;
einen Partikelsensor (70), der eine Partikelkonzentration der Luft, die in dem Klimatisierungskanal strömt, erfasst; und

einen Bestimmungsbereich (80), der bestimmt, ob eine Sammelleistung des Filters reduziert ist, auf der Grundlage der Partikelkonzentration, die durch den Partikelsensor erfasst wird, wobei der Bestimmungsbereich eine erste Grenzwertkonzentration, die für die Partikelkonzentration, die durch den Partikelsensor erfasst wird, festgelegt ist, und eine zweite Grenzwertkonzentration hat, die kleiner ist als die erste Grenzwertkonzentration,

**dadurch gekennzeichnet, dass**

der Bestimmungsbereich bestimmt, ob die Sammelleistung des Filters reduziert ist, auf der Grundlage einer verstrichenen Zeit, die für die Partikelkonzentration, die durch den Partikelsensor erfasst wird, erforderlich ist, um sich von der ersten Grenzwertkonzentration auf die zweite Grenzwertkonzentration zu reduzieren, und

der Bestimmungsbereich die erste Grenzwertkonzentration und die zweite Grenzwertkonzentration bei einer Erhöhung eines Luftblasvolumens der Gebläsevorrichtung (21) reduziert.

2. Fahrzeugklimaanlage nach Anspruch 1, wobei

der Bestimmungsbereich überwacht, ob ein vorbestimmter Fahrzeugbetrieb, der die Partikelkonzentration in dem Fahrzeuginnenraum erhöht, während der Bestimmung ausgeführt wird, ob die Sammelleistung des Filters reduziert ist, und

wenn der Bestimmungsbereich ein Ausführen des vorbestimmten Fahrzeugbetriebs erfasst, der Bestimmungsbereich die Bestimmung stoppt, ob die Sammelleistung des Filters reduziert ist.

3. Fahrzeugklimaanlage nach Anspruch 1 oder 2, die des Weiteren eine Alarmeinheit (61) aufweist, die eine Information über eine Aufforderung zum Austausch des Filters vorsieht, wenn eine Reduktion der Sammelleistung des Filters erfasst wird.

**Revendications**

1. Appareil de climatisation de véhicule (1) qui réalise la climatisation d'un intérieur de véhicule en soufflant de l'air s'écoulant dans une conduite de climatisation (10) jusqu'à l'intérieur du véhicule, l'appareil de climatisation de véhicule comprenant :

une conduite de climatisation (10) ;
un dispositif de soufflante (21) qui souffle l'air dans le conduit de climatisation ;
un filtre (17) qui collecte des particules incluses dans l'air s'écoulant dans la conduite de climatisation ;
un capteur de particules (70) qui détecte une concentration particulaire de l'air s'écoulant dans la conduite de climatisation ; et

une section de détermination (80) qui détermine si la performance de collecte du filtre est réduite sur la base de la concentration particulaire détectée par le capteur de particules, dans lequel : la section de détermination a un premier ensemble de concentration de seuil pour la concentration particulaire détectée par le capteur de particules, et une seconde concentration de seuil inférieure à la première concentration de seuil, **caractérisé en ce que** :

la section de détermination détermine si la performance de collecte du filtre est réduite sur la base d'un temps écoulé requis pour que la concentration particulaire détectée par le capteur de particules soit réduite de la première concentration de seuil à la seconde concentration de seuil, et la section de détermination réduit la première concentration de seuil et la seconde concentration de seuil avec l'augmentation du volume d'écoulement d'air du dispositif de soufflante (21).

2. Appareil de climatisation de véhicule selon la revendication 1, dans lequel :

la section de détermination surveille si une opération de véhicule prédéterminée accroissant la concentration particulaire à l'intérieur du véhicule est réalisée pendant la détermination du fait que la performance de collecte du filtre est réduite, et lorsque la section de détermination détecte la réalisation de l'opération de véhicule prédéterminée, la section de détermination arrête la détermination du fait que la performance de collecte du filtre est réduite.

3. Appareil de climatisation de véhicule selon la revendication 1 ou 2, comprenant en outre une unité d'alarme (61) qui fournit l'information concernant l'invitation à remplacer le filtre lorsque la réduction de la performance de collecte du filtre est détectée.

FIG. 1

EP 3 572 255 B1

# FIG. 2

EP 3 572 255 B1

# FIG. 3

START

↓

START DETECTING
PARTICULATE
CONCENTRATION CD — S10

↓

S11
CD<CDth11 ? — NO

YES

↓

START COUNTING
ELAPSED TIME Ta — S12

↓

S13
CD<CDth12 ? — NO

YES

↓

STOP COUNTING
ELAPSED TIME Ta — S14

↓

S15
Ta<Tth11 ? — NO — S16
INFORM
FILTER REPLACEMENT

YES

↓

END

14

# FIG. 4

# FIG. 5

```
            ┌─────────────────┐
            │      START       │
            └─────────────────┘
                     │
            ┌─────────────────┐
            │ START DETECTING  │
            │   PARTICULATE    ├── S10
            │ CONCENTRATION CD │
            └─────────────────┘
                     │
                     ▼
                 ╱        ╲   S11
                ╱  CD<CDth11 ╲  NO
                ╲     ?      ╱──────┐
                 ╲        ╱         │
                     │ YES          │
                     ▼              │
            ┌─────────────────┐     │
            │ START COUNTING   │     │
            │ ELAPSED TIME Ta  ├── S12│
            └─────────────────┘     │
                     │              │
                     ▼              │
       YES     ╱          ╲  S17    │
    ┌─────────╱ PREDETERMINED╲      │
    │         ╲VEHICLE OPERATION    │
    │          ╲CARRIED OUT?╱       │
    │              │ NO             │
    │              ▼               │
    │         ╱        ╲  S13       │
    │        ╱  CD<CDth12 ╲  NO     │
    │        ╲     ?      ╱─────────┘
    │         ╲        ╱
    │            │ YES
    │            ▼
    │   ┌─────────────────┐
    │   │  STOP COUNTING   │
    │   │ ELAPSED TIME Ta  ├── S14
    │   └─────────────────┘
    │            │
    │            ▼
    │       ╱        ╲  S15
    │      ╱  Ta<Tth11 ╲  NO        S16
    │      ╲     ?      ╱────────┐
    │       ╲        ╱           ▼
    │          │ YES    ┌─────────────────┐
    │          │        │     INFORM       │
    │          │        │ FILTER REPLACEMENT│
    │          │        └─────────────────┘
    │          │                 │
    └──────────┼─────────────────┘
               ▼
        ┌─────────────┐
        │     END      │
        └─────────────┘
```

16

**FIG. 6**

```
         ┌─────────────────┐
         │      START      │
         └─────────────────┘
                  │
                  ▼
     ┌─────────────────────────┐
     │   START DETECTING       │  S10
     │   PARTICULATE           │
     │   CONCENTRATION CD      │
     └─────────────────────────┘
                  │
                  ▼
              ╱───────╲  S11
         ────╱ CD<CDth11 ╲──── NO
             ╲    ?    ╱
              ╲───────╱
                  │ YES
                  ▼
     ┌─────────────────────────┐
     │   START COUNTING        │  S12
     │   ELAPSED TIME Ta       │
     └─────────────────────────┘
                  │
                  ▼
              ╱───────╲  S13
         ────╱ CD<CDth12 ╲──── NO
             ╲    ?    ╱
              ╲───────╱
                  │ YES
                  ▼
     ┌─────────────────────────┐
     │   STOP COUNTING         │  S14
     │   ELAPSED TIME Ta       │
     └─────────────────────────┘
                  │
                  ▼
              ╱───────╲  S18
         ────╱ Ta<Tth12 ╲──── NO
             ╲    ?    ╱          │
              ╲───────╱           ▼
                  │ YES    ┌──────────────────┐  S19
                  │        │   RECOMMEND      │
                  │        │ FILTER REPLACEMENT│
                  │        └──────────────────┘
                  ▼
              ╱───────╲  S20
         ────╱ Ta<Tth13 ╲──── NO
             ╲    ?    ╱          │
              ╲───────╱           ▼
                  │ YES    ┌──────────────────┐  S21
                  │        │     ALERT        │
                  │        │ FILTER REPLACEMENT│
                  │        └──────────────────┘
                  ▼
         ┌─────────────────┐
         │       END       │
         └─────────────────┘
```

17

# FIG. 7

# FIG. 8

```
        ┌─────────────────┐
        │      START       │
        └─────────────────┘
                 │
                 ▼
        ┌─────────────────┐
        │     DETECT       │
        │ FIRST PARTICULATE│ ─── S30
        │CONCENTRATION CD20│
        └─────────────────┘
                 │
                 ▼
        ┌─────────────────┐
        │  START COUNTING  │ ─── S31
        │ ELAPSED TIME Ta  │
        └─────────────────┘
                 │
                 ▼            S32
              ◇─────────◇      NO
             ◇ Ta>Tth21 ◇ ─────────┐
              ◇   ?    ◇            │
                 │                  │
                YES                 │
                 ▼                  │
        ┌─────────────────┐         │
        │     DETECT       │ ─── S33 │
        │SECOND PARTICULATE│         │
        │CONCENTRATION CD30│         │
        └─────────────────┘         │
                 │                  │
                 ▼                  │
        ┌─────────────────┐         │
        │ CALCULATE DECAY  │ ─── S34 │
        │     RATIO        │         │
        └─────────────────┘         │
                 │                  │
                 ▼          S35      │
              ◇─────────◇   NO      S36
             ◇  ζ<ζth?  ◇ ──────┐   │
              ◇        ◇        │   │
                 │          ┌───────────────┐
                YES         │    INFORM      │
                 │          │FILTER REPLACEMENT│
                 │          └───────────────┘
                 ◄─────────────────┘
                 ▼
        ┌─────────────────┐
        │      END         │
        └─────────────────┘
```

# FIG. 9

# FIG. 10

```
                    ┌──────────────────┐
                    │      START       │
                    └──────────────────┘
                             │
                             ▼
              ┌──────────────────────────┐
              │  DETECT PARTICULATE      │ ── S40
              │  CONCENTRATION CD        │
              └──────────────────────────┘
                             │
                             ▼
              ┌──────────────────────────┐
              │  START COUNTING          │ ── S41
              │  ELAPSED TIME Ta         │
              └──────────────────────────┘
                             │
                             ▼
                           S42
                        ◇─────────◇          NO
                       ╱  Ta>Tth31 ╲────────────────┐
                       ╲     ?     ╱                 │
                        ◇─────────◇                  │
                             │ YES                   │
                             ▼                        │
                           S43                        │
                        ◇─────────◇    NO             │
                       ╱ CD40<CDth31╲──────────┐      │
                       ╲     ?      ╱          │      │
                        ◇─────────◇            ▼      │
                             │ YES      ┌──────────────┐ ── S44
                             │          │  INFORM      │
                             │          │  FILTER      │
                             │          │  REPLACEMENT │
                             │          └──────────────┘
                             │◄────────────────┘
                             ▼
                    ┌──────────────────┐
                    │       END        │
                    └──────────────────┘
```

21

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014366719 A1
- JP H09202134 A
- US 2015275738 A1
- JP 3588887 B
- EP 2199697 A1
- JP 2016169924 A